# EUROPEAN PATENT APPLICATION

(11) **EP 0 600 822 A1**
(43) Date of publication of application: **08.06.1994**
(21) Application number: 93500157.8
(22) Date of filing: 03.12.1993
(51) Int. Cl.: H04M 15/30

(54) **Universal telephone kiosk for the cellular telephone system**

(30) Priority: 04.12.1992 ES 9203604
(71) Applicant: GUADARRAMA INGENIEROS, S.A., E-28003 Madrid (ES)
(72) Inventor: Artero Garcia, José, E-28003 Madrid (ES)
(74) Representative: Pons Arino, Angel

(57) **Abstract**

Universal telephone kiosk for the cellular telephone system; used in passenger vehicles or in fixed locations; made up of: a base box (2) inside which is installed a printed circuit board (CPU) (4) with its memory microprocessor and the elements required for it to function and interconnect; a coin box (7) with register and discriminator, with entry and outlet slits (13,14) for coins and auxiliary relays to select the same, a safe (6) with security key to store coins accepted; a visualizer display (12) and loudspeaker to give appropriate information to the user; holding means(19) to anchor all the elements and also a cover in which is a cavity to hold the telephone with earpiece and some openings to introduce and return coins and access by lock and security key to the coin box (15), as well as the window (12) for the visualizer display.

## Description

The present invention refers to a small size telephone kiosk that can be installed and used in vehicles for the transport of passengers or in static places, using the cellular telephone network and incorporating a system to read the tariffs applied and with direct visual information on balances available at any time for the user of the apparatus.

In order to achieve these objectives, the universal telephone kiosk consists principally of a base-box which holds and protects the different mechanical, electrical and electronic elements, and an external cover or closure that serves to enclose the same and give an aesthetic shape to the whole.

Inside and accessible only to specialized personnel, the following principal elements are placed and installed:
* Printed circuit board (CPU) with memory microprocessor and all items for its functioning and interconnection.
* Coin box with register and discriminator, with entry and outlet opening for coins and auxiliary relays to select the same.
* A safe with security key to store accepted coins.
* A visual display and speaker to give appropriate information to the user.
* Holding elements to anchor the whole and also a cover for the universal kiosk.
* Adequate perforations to hold the kiosk in different locations.

On the outside, as a cover, a plastic, self-extinguishing thermomolded cover will be placed, having a specially designed cavity to hold the telephone itself, with earphone, holes to introduce and return coins, access through a lock and security key to the coin box, the hole for the visual display and kiosk use indicators.

The external shape of the universal kiosk may be of different designs but the kiosk can be programmed for use for different types of transmission.

The kiosk object of the invention has a speaker programme that integrates the microprocessor and memories located on the printed circuit board, allowing dialogue between the transceiver of each telephone and correct action according to pre-instructions given beforehand.

For the part related to tariff application, that is payment for the call, the kiosk is equipped with two alternatives: one that allows payment to be programmed through available call time and another by call money available. Both alternatives are directly related to the teletaxation system installed by the company supplying the telephone service and, naturally, is strictly in accordance with the law regarding tariffs for this service.

In order to avoid any alteration to the tariffs allowed by the corresponding law, the equipment has security stamps and adequate guaranty codes.

Furthermore, the universal kiosk has a series of accessories that allow the same to be adapted to different types of use, that is, different electrical currents, different relays, etc..

In order to more easily understand not only the formation but also the use of the kiosk object of the invention, reference is made below to a practical example where the said execution is merely enunciative and in no way limits the same, all in accordance with that shown on the attached drawings, in which:

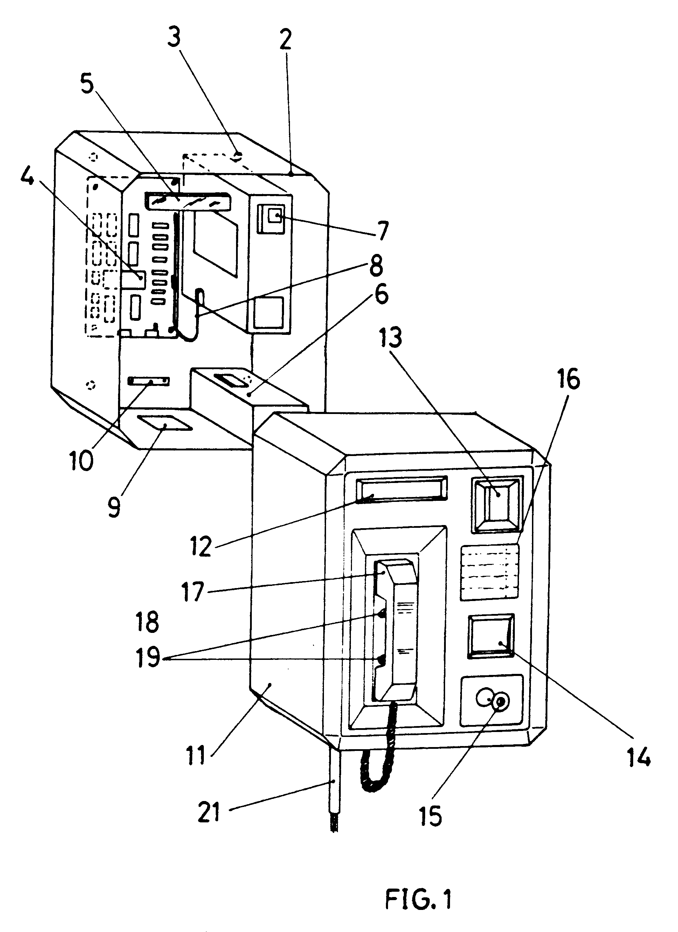

Figure 1 gives a view in perspective of the overall universal kiosk of the invention.

Figure 2 shows a schematic layout corresponding to a general block diagramme for the universal kiosk of the invention.

With reference to the drawings, these show the universal kiosk 1 for the cellular telephone system.

This kiosk 1 is formed by a base-box 2 with holding screws 3 on the bottom wall.

Mounted on the box is a printed circuit board (CPU) 4, with connectors; a display 5, indicator, a coin safe 6, a coin holder 7, interconnection cables 8, a cables entry 9 and a cable holder 10.

The kiosk 2 is closed with a lid 11, having: an indicator display window 12, a slit 13 for the introduction of coins, a slit 14 for the return of coins, a box 15 for coins with security lock, an instructions label 16, a cellular telephone 17 placed on a support plate 18, held with screws 19, whose earpiece has a flexible cable 20 next to which appear the cables 21 for power and for the transceiver.

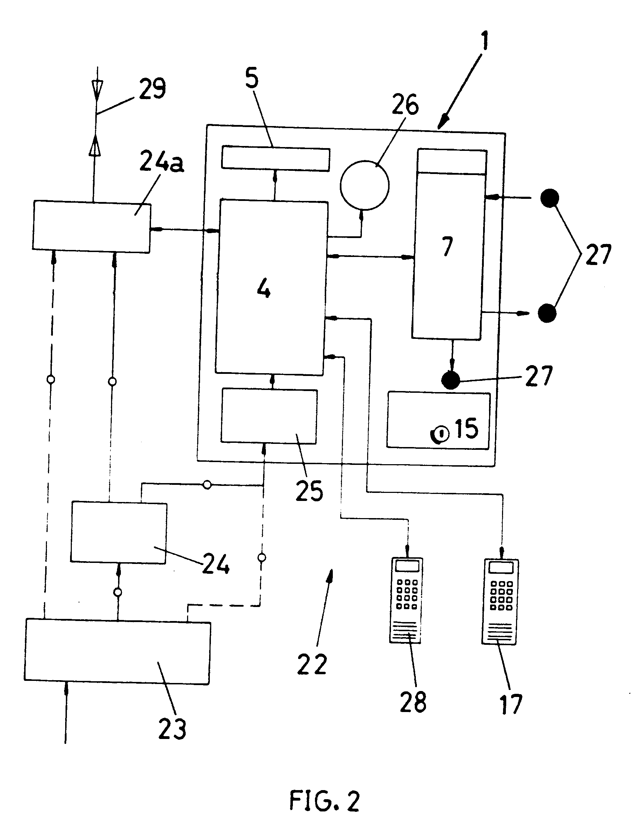

Figure 2 shows a block diagramme 22 with an energy supply source 23, whose voltage can be modified if necessary by a converter 24, to feed a transceiver 24a and the CPU, where in this case the power supply is also modified by a converter 25.

The CPU 4, is connected to the visualizer 5, a loudspeaker 26, the coin box 7 that receives and returns coins 27, and in which coin box the coin 27 passes to the coins box 15.

To the CPU is connected the telephone 17 and an auxiliary telephone 28, preferably without earpiece, in case the equipment is used in bus lines.

The communication signal is received through the transceiver 24a and the antenna 29.

From the transceiver the signal is sent to the CPU 4 that establishes the connection between the transceiver 24a and the telephones 27 and 28, and also sends the order to the visualizer 5, the loudspeaker 26 and the coin box 7.

Having sufficiently described the nature of the invention and the manner of putting it into practice, it should be noted that the layouts indicated above and shown in the attached drawings may be modified in detail if the fundamental principle is not altered.

## Claims

1. Universal telephone kiosk for the cellular telephone system; used in passenger vehicles or in fixed locations; characterized because it is made up of: a base.box inside which is installed a printed circuit board (CPU) with its memory microprocessor and the elements required for it to function and interconnect; a coin box with register and discriminator, with entry and outlet slits for coins and auxiliary relays to select the same, a safe with security key to store coins accepted; a visualizer display and loudspeaker to give appropriate information to the user; holding means to anchor all the elements and also a cover in which is a cavity to hold the telephone with earpiece and some openings to introduce and return coins and access by lock and security key to the coin box, as well as the window for the visualizer display.

2. Kiosk according to claim 1, characterized because an auxiliary telephone is connected to the CPU as well as the service telephone.
